# EUROPEAN PATENT APPLICATION

(11) **EP 4 617 924 A1**
(43) Date of publication of application: **17.09.2025**
(21) Application number: 25161513.4
(22) Date of filing: 04.03.2025
(51) Int. Cl.: G06F 21/10, G06F 21/44, G06F 21/60

(54) **TERMINAL DEVICE, ELECTRONIC DEVICE, AND AUTHENTICATION SYSTEM**

(30) Priority: 11.03.2024 JP 2024037362
(71) Applicant: KYOCERA Document Solutions Inc., Osaka-shi, Osaka, 540-8585 (JP)
(72) Inventor: Martin MONTECLARO, Dino, Osaka-shi, Osaka, 540-8585 (JP); BACLAYON, Jonrel, Osaka-shi, Osaka, 40-8585 (JP)
(74) Representative: Herrero & Asociados, S.L.

(57) **Abstract**

A terminal device (3) includes a storage device (33) containing in advance a serial number unique to an electronic device (2), a reader-writer (39) that performs short-range wireless communication, with an electronic tag (4) provided in the electronic device (2), a communication device (34) that communicates with a management device (5) that manages a license key corresponding to the serial number, and a control device (300) that acts as a controller (30). The controller (30) retrieves information from the electronic tag (4) via the reader-writer (39), acquires, when the retrieved information accords with the serial number stored in the storage device (33), the license key corresponding to the according serial number from the management device (5) via the communication device (34), and writes the license key in the electronic tag (4) via the reader-writer (39), but keeps from acquiring and writing the license key, when the retrieved information discords with the serial number stored in the storage device (33).

## Description

### BACKGROUND

The present invention relates to a terminal device, an electronic device, and an authentication system, and in particular to a technique to authenticate a product license.

Various techniques, to make a device or an application usable, are known. A first example of the known technique includes shifting a near-field communication (NFC) device from an ineffective mode to an effective mode, when an activation code manually inputted by the user accords with the activation code stored in advance in a memory.

A second example of the known technique includes starting up an application, upon performing verification, approval, and compatibility check of the user and a payment provider system, through transmission of the user information, a unique identifier, and a code between the NFC device and the system, via a network.

### SUMMARY

The invention proposes further improvement of the foregoing technique.

In an aspect, the invention provides a terminal device including a storage device, a reader-writer, a communication device, and a control device. The storage device contains in advance a serial number unique to an electronic device. The reader-writer performs short-range wireless communication, with an electronic tag provided in the electronic device. The communication device communicates with a management device that manages a license key corresponding to the serial number. The control device includes a processor, and acts as a controller when the processor executes a computer program. The controller retrieves information from the electronic tag via the reader-writer, acquires, when the retrieved information accords with the serial number stored in the storage device, the license key corresponding to the according serial number from the management device via the communication device, and writes the license key in the electronic tag via the reader-writer, but keeps from acquiring and writing the license key, when the retrieved information discords with the serial number stored in the storage device.

In another aspect, the invention provides an electronic device including an electronic tag, a processing device, and a control device. The electronic tag contains information. The processing device executes a predetermined operation. The control device includes a processor, and acts as a controller when the processor executes a computer program. The controller restricts the processing device from being used, in an initial state, and cancels the use restriction on the processing device, when a license key is written in the electronic tag.

In still another aspect, the invention provides an authentication system including an electronic device and a terminal device. The electronic device includes an electronic tag, a processing device, and a first control device. The electronic tag contains information. The processing device executes a predetermined operation. The first control device includes a processor, and acts as a first controller when the processor executes a computer program. The first controller restricts the processing device from being used, in an initial state. The terminal device includes a storage device, a reader-writer, a communication device, and a second control device. The storage device contains in advance a serial number unique to an electronic device. The reader-writer performs short-range wireless communication, with an electronic tag provided in the electronic device. The communication device communicates with a management device that manages a license key corresponding to the serial number. The second control device includes a processor, and acts as a second controller when the processor executes a computer program. The second controller retrieves the information from the electronic tag via the reader-writer, acquires, when the retrieved information accords with the serial number stored in the storage device, the license key corresponding to the according serial number from the management device via the communication device, and writes the license key in the electronic tag via the reader-writer, but keeps from acquiring and writing the license key, when the retrieved information discords with the serial number stored in the storage device. The first controller of the electronic device cancels the use restriction on the processing device, when the license key is written in the electronic tag.

### BRIEF DESCRIPTION OF THE DRAWINGS

Fig. 1 is a schematic diagram showing a configuration of an authentication system;
Fig. 2 is a front cross-sectional view showing a structure of an image forming apparatus;
Fig. 3 is a block diagram showing a configuration of the image forming apparatus;
Fig. 4 is a block diagram showing a configuration of a terminal device;
Fig. 5 presents an example of a management screen;
Fig. 6A is a flowchart showing a license authentication process;
Fig. 6B is a flowchart showing the license authentication process, following the process of Fig. 6A;
Fig. 6C is a flowchart showing the license authentication process, following the process of Fig. 6B;
Fig. 7 presents an example of an input screen;
Fig. 8 presents an example of a first notification screen;
Fig. 9 presents an example of a first instruction screen;
Fig. 10 presents an example of a first error screen;
Fig. 11 presents an example of a second notification screen;
Fig. 12 presents an example of a second error screen;
Fig. 13 presents an example of a second instruction screen;
Fig. 14 presents an example of a third error screen;
Fig. 15 presents an example of a third instruction screen;
Fig. 16 is a flowchart showing a use-restriction cancelling process; and
Fig. 17 presents an example of a completion screen.

### DETAILED DESCRIPTION

Hereafter, a terminal device, an image forming apparatus, and an authentication system according to an embodiment of the invention will be described, with reference to the drawings.

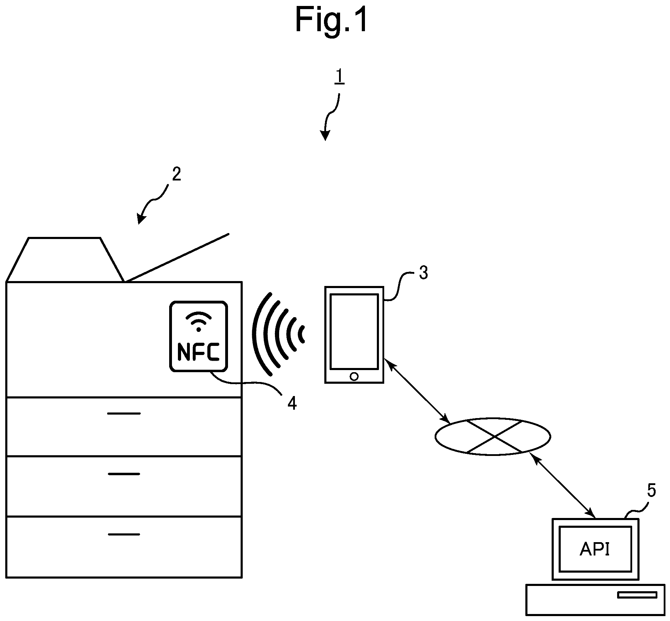

Fig. 1 is a schematic diagram showing a configuration of the authentication system 1 according to the embodiment of the invention. As shown in Fig. 1, the authentication system 1 includes an image forming apparatus 2 and a terminal device 3. The image forming apparatus 2 includes a near-field communication (NFC) tag 4. The NFC tag 4 contains a serial number unique to the image forming apparatus 2. The terminal device 3 may be, for example, a smartphone. The terminal device 3 is configured to communicate with a partner application programming interface (API) 5 on a network. The API 5 is a management device that manages a license key corresponding to the serial number unique to the image forming apparatus 2.

### Configuration of Image Forming Apparatus 2

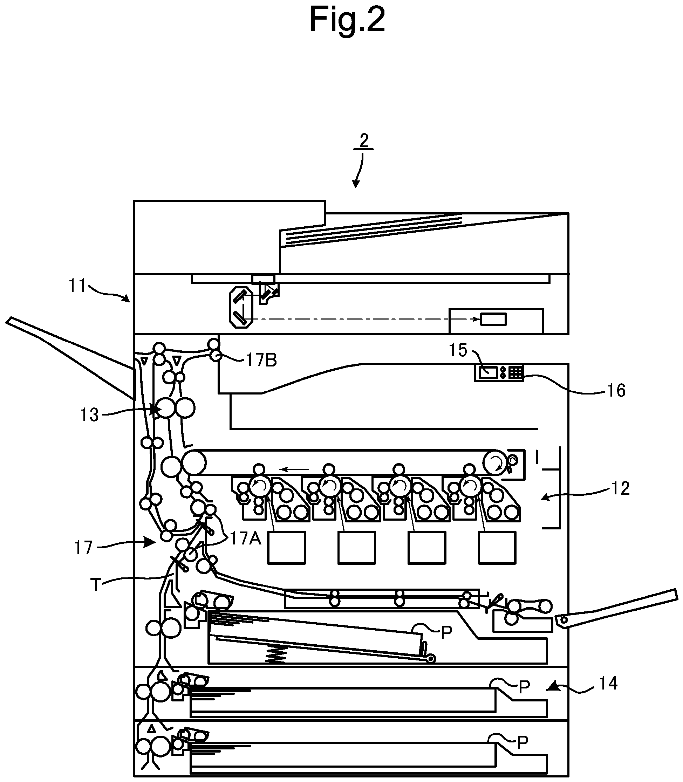

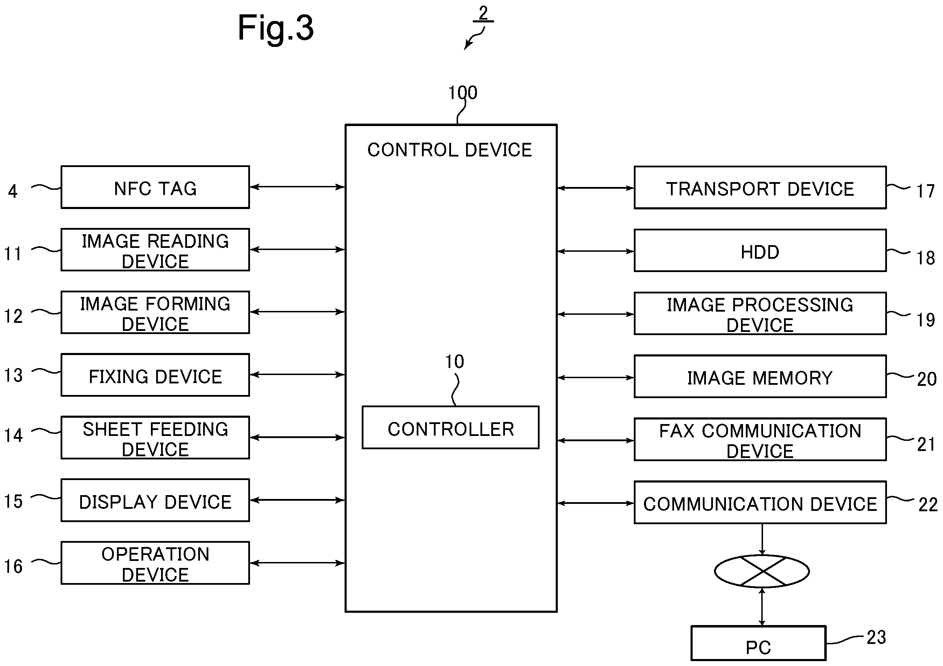

Fig. 2 is a front cross-sectional view showing the structure of the image forming apparatus 2. Fig. 3 is a block diagram showing the configuration of the image forming apparatus 2. Referring to Fig. 2, the image forming apparatus 2 is a multifunction peripheral having a plurality of functions, such as copying, transmitting, printing, and facsimile transmission. An image reading device 11, an image forming device 12, a fixing device 13, a sheet feeding device 14, and so forth are accommodated inside the casing of the image forming apparatus 2.

The image reading device 11 reads the image of a source document, either by a moving document reading method or a fixed document reading method, and generates image data.

The image forming device 12 includes a photoconductor drum, a charging device, an exposure device, a development device, and a transfer device. The image forming device 12 forms an image constituted of a toner image, on a sheet P transported along a transport route T, on the basis of the image data.

The fixing device 13 heats and presses the sheet P on which the toner image has been formed by the image forming device 12, to thereby fix the toner image onto the recording sheet P. The sheet P onto which the toner image has been fixed is delivered to an output tray.

The sheet feeding device 14 includes a manual bypass tray, and a plurality of sheet cassettes. The sheet feeding device 14 draws out, one by one with a pickup roller, the sheets P stored in one of the plurality of sheet cassettes, or the sheets placed on the manual bypass tray, and delivers the sheets to the transport route T.

Referring to Fig. 3, the image forming apparatus 2 includes a control device 100. The control device 100 includes a processor, a random-access memory (RAM), and a read-only memory (ROM). The processor is, for example, a central processing unit (CPU), a micro processing unit (MPU), or an application-specific integrated circuit (ASIC).

The control device 100 is electrically connected to the NFC tag 4, the image reading device 11, the image forming device 12, the fixing device 13, the sheet feeding device 14, a display device 15, an operation device 16, a transport device 17, a hard disk drive (HDD) 18, an image processing device 19, an image memory 20, a facsimile communication device 21, and a communication device 22.

The NFC tag 4 contains information, typically exemplified by a serial number unique to the image forming apparatus 2. The NFC tag 4 is attached to the casing of the image forming apparatus 2.

The control device 100 acts as a controller 10, when the processor executes the computer programs stored in the built-in ROM or HDD 18. The controller 10 controls the overall operation of the image forming apparatus 2.

Here, the controller 10 may be constituted in the form of a logic circuit, instead of being realized by the operation according to the computer program, or constituted of two or more control devices.

The display device 15 is, for example, constituted of an LCD or an organic light-emitting diode (OLED) display. The display device 15 displays various types of screens. The operation device 16 includes a plurality of hard keys, and a touch panel overlaid on the display device 15. The operation device 16 receives an instruction from the user.

The transport device 17 includes a transport roller pair 17A, a delivery roller pair 17B, and a transport motor. The controller 10 drives the transport motor to rotate, to cause the transport roller pair 17A and the delivery roller pair 17B to rotate, thereby transporting the sheet P along the transport route T.

The HDD 18 stores therein the image data generated by the image reading device 11, and the computer programs for realizing the functions of the image forming apparatus 2. As an example of the computer programs, the HDD 18 contains a cancelling program, for executing a use-restriction cancelling process, which will be subsequently described.

The image processing device 19 executes, as necessary, the image processing with respect to the image data generated by the image reading device 11. The image memory 20 temporarily stores therein the image data generated by the image reading device 11.

The facsimile communication device 21 transmits and receives the image data via the public telephone line. The communication device 22 includes a communication module such as a local area network (LAN) board. The controller 10 performs data communication through the communication device 22, with an external device such as a personal computer (PC) connected via a network.

A power source is connected to each of the components of the image forming apparatus 2. When the user turns the power on, the power is supplied to those components from the power source.

In this embodiment, the image forming apparatus 2 is configured such that, in the initial state at the time of delivery from the factory, the controller 10 restricts the image reading device 11, the image forming device 12, the fixing device 13, the sheet feeding device 14, the facsimile communication device 21, and the communication device 22 from being utilized. The controller 10 executes the use-restriction cancelling process, by operating according to the cancelling program, when the license key is written in the NFC tag 4. Here, the components cited above correspond to the processing device in the invention.

### Configuration of Terminal Device 3

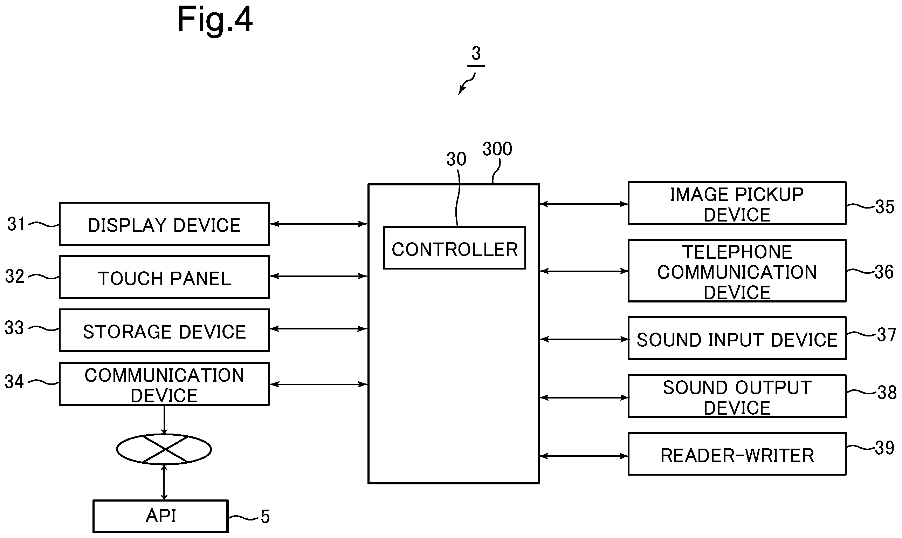

Fig. 4 is a block diagram showing a configuration of the terminal device 3. As shown in Fig. 4, the terminal device 3 includes a control device 300, a display device 31, a touch panel 32, a storage device 33, a communication device 34, an image pickup device 35, a telephone communication device 36, a sound input device 37, a sound output device 38, and a reader-writer 39.

The control device 300 includes a processor, a RAM, and so forth. The processor is, for example, a CPU, an MPU, or an ASIC. The control device 300 acts as a controller 30, when the processor executes the various computer programs stored in the storage device 33.

The controller 30 controls the overall operation of the terminal device 3. Here, the controller 30 may be constituted in the form of a logic circuit, instead of being realized by the operation according to the computer program, or constituted of two or more control devices.

The control device 300 is electrically connected to the display device 31, the touch panel 32, the storage device 33, the communication device 34, the image pickup device 35, the telephone communication device 36, the sound input device 37, the sound output device 38, and the reader-writer 39.

The display device 31 includes an LCD or an OLED display. The display device 31 displays various types of screens. The touch panel 32 is, for example, of a resistive film type or an electrostatic capacitance type, and overlaid on the display device 31. To the touch panel 32, information such as an instruction from the user is inputted. The touch panel 32 exemplifies the operation device in the invention.

The storage device 33 is a large-capacity memory unit such as a flash memory. The storage device 33 stores therein various computer programs for realizing the functions of the terminal device 3. The storage device 33 also contains in advance a product list including the product ID of the image forming apparatus 2 and the serial number unique to the image forming apparatus 2, in association with each other.

As an example of the computer programs, the storage device 33 contains an application program for managing the authentication of the product license (product activation), with respect to the image forming apparatus 2. The application program includes an authentication program for executing a license authentication process, which will be subsequently described.

The communication device 34 includes a communication module. The controller 30 performs data communication, via the communication device 34, with an external device such as the API 5 on the network. The image pickup device 35 is, for example, a digital camera including an image sensor and a lens. The telephone communication device 36 transmits and receives audio data, through the public telephone network.

The sound input device 37 includes a microphone and an A/D conversion circuit. The sound input device 37 converts an analog signal representing a voice inputted to the microphone, into a digital signal. The sound output device 38 includes a D/A conversion circuit, a speaker, and an amplifier. The sound output device 38 converts the digital signal representing audio data into the analog signal, and outputs the sound represented by the analog signal.

The reader-writer 39 performs the near-field communication, with the NFC tag 4 provided in the image forming apparatus 2. The reader-writer 39 can both read and write information, from and in the NFC tag 4. The reader-writer 39 is installed inside the main body of the terminal device 3.

A power source is connected to each of the components of the terminal device 3, so that when the power is supplied from the power source, those components are activated.

In this embodiment, the controller 30 of the terminal device 3 executes the license authentication process, by operating according to the authentication program. The license authentication process includes retrieving the information from the NFC tag 4 via the reader-writer 39, acquiring, when the retrieved information accords with the serial number stored in the storage device 33, the license key corresponding to the according serial number from the API 5 via the communication device 34, writing the acquired license key in the NFC tag 4, via the reader-writer 39, and keeping from acquiring and writing the license key, when the retrieved information discords with the serial number stored in the storage device 33.

### Operation of Authentication System 1

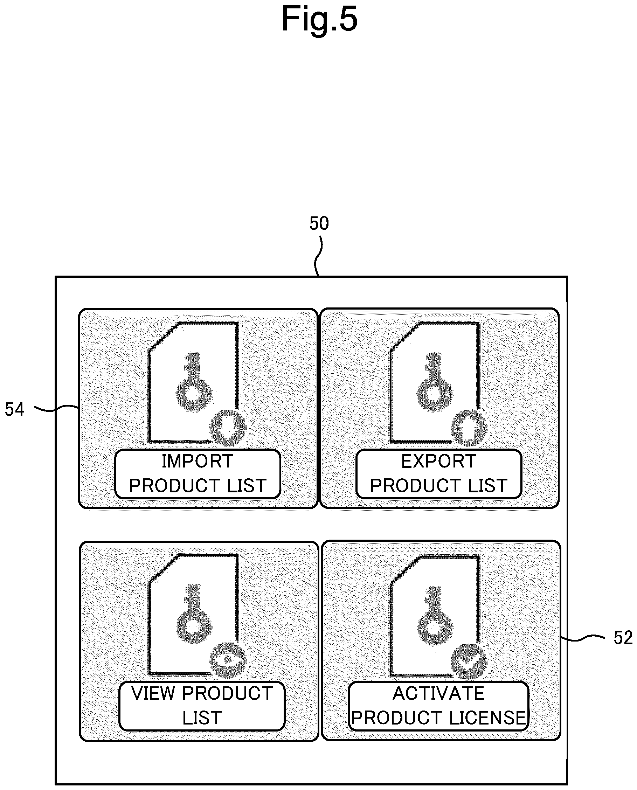

Referring now to Fig. 5 to Fig. 17, the operation of the authentication system 1, performed when executing the license authentication process and the use-restriction cancelling process, will be described hereunder.

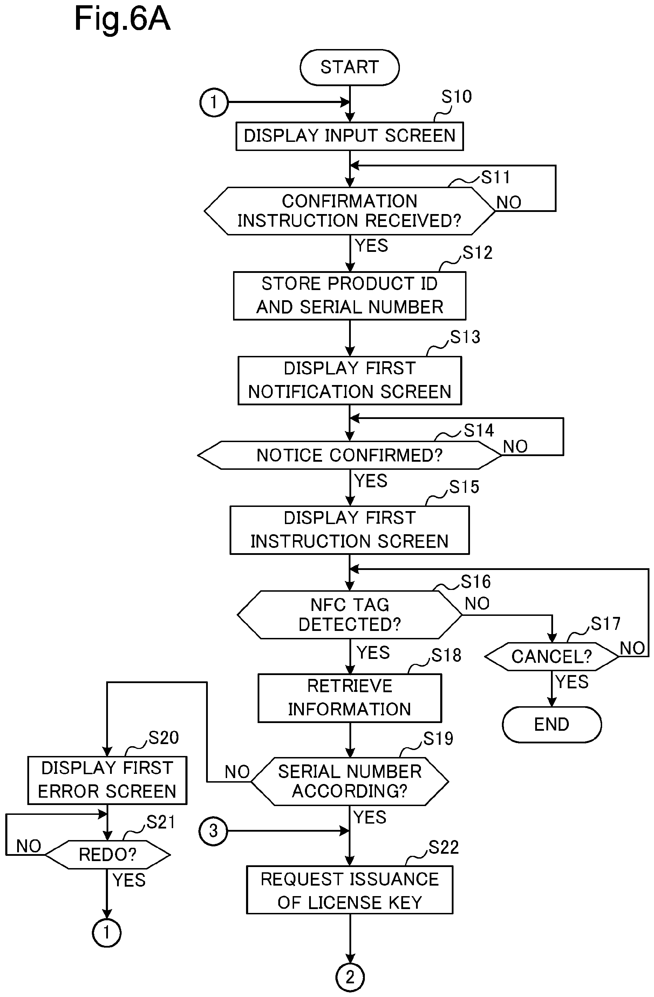

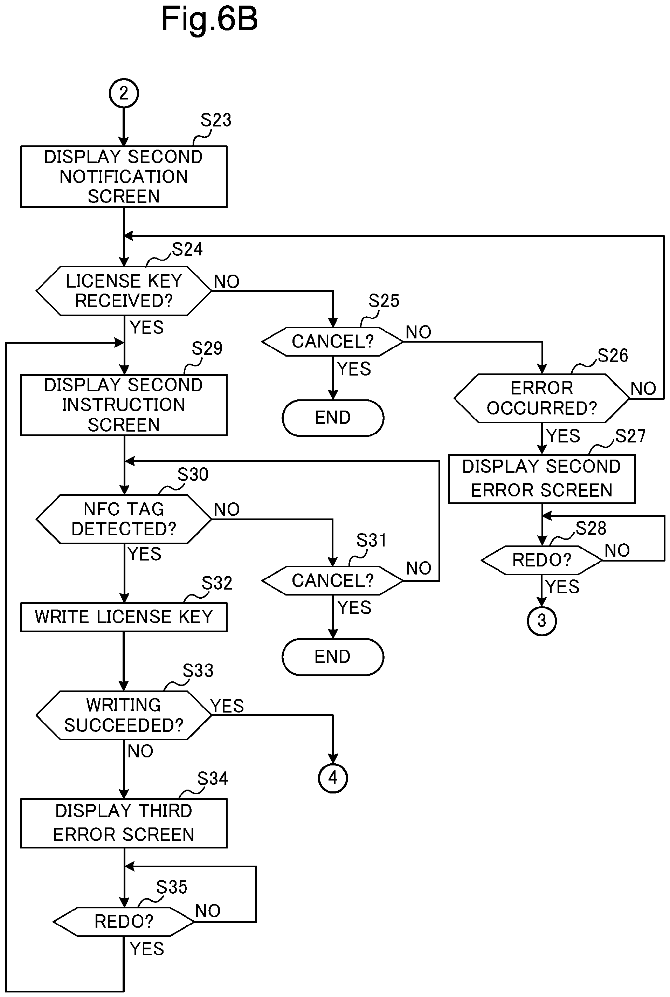

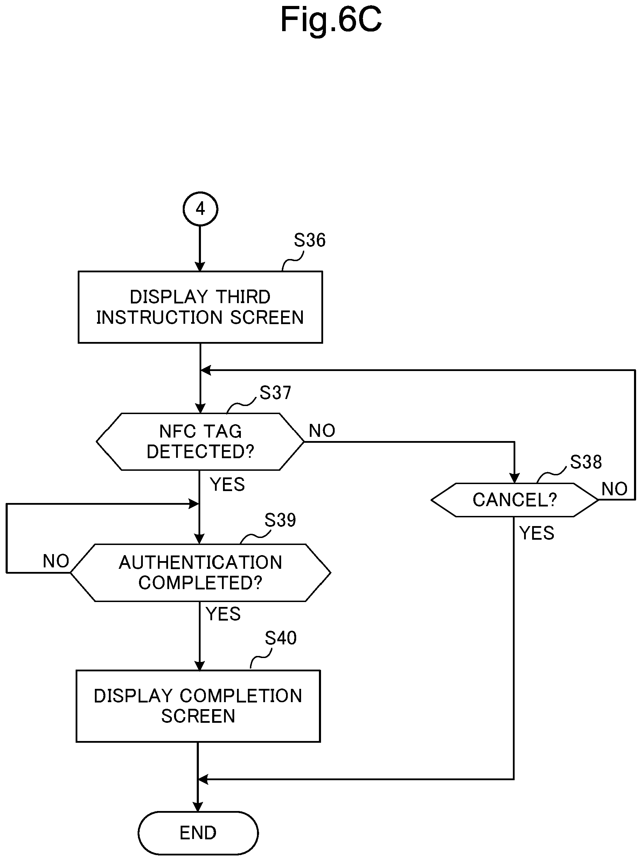

For example, the user inputs, through the touch panel 32, an instruction to start up the application program for managing the authentication of the product license with respect to the image forming apparatus 2. Upon receipt of the start-up instruction through the touch panel 32, the controller 30 of the terminal device 3 causes the display device 31 to display a management screen 50 shown in Fig. 5. When the user touches an authentication start key 52 in the management screen 50, the touch panel 32 detects the touch operation performed on the authentication start key 52, and the controller 30 starts to execute the license authentication process, as specified in Fig. 6A to Fig. 6C.

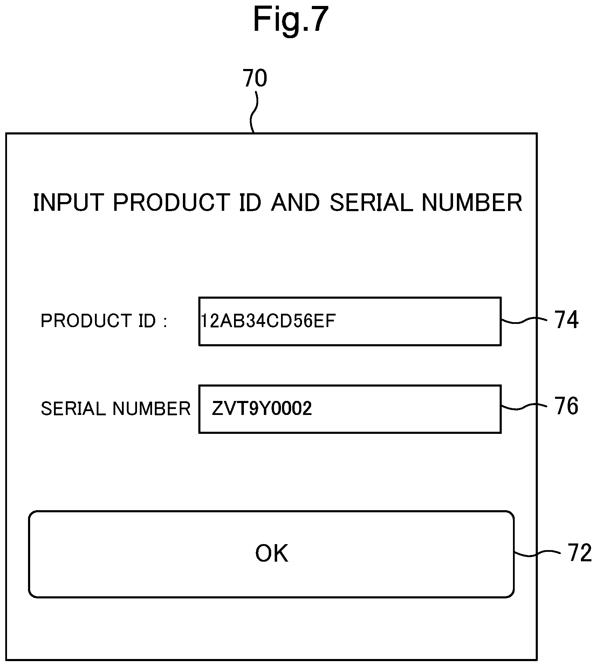

In the license authentication process, the controller 30 causes the display device 31 to display an input screen 70 for inputting the product ID and the serial number of the image forming apparatus 2, as shown in Fig. 7 (step S10). After step S10, the controller 30 repeatedly decides that the inputted data has not been confirmed yet, until an enter key 72 in the input screen 70 is touched (NO at step S11).

The user inputs the product ID and the serial number of the image forming apparatus 2, acquired from the supplier at the time of purchase, through the touch panel 32. The controller 30 causes the display device 31 to display the inputted product ID in a box 74, and the inputted serial number in a box 76. In view of the product ID and the serial number displayed, the user touches the enter key 72.

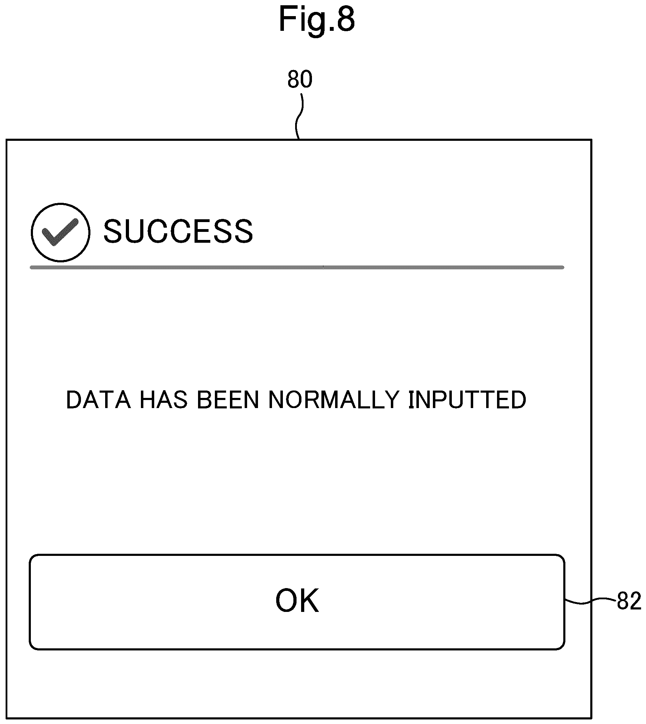

When the touch panel 32 detects the touch operation performed on the enter key 72, the controller 30 decides that the inputted data has been confirmed (YES at step S11), and stores the product ID and the serial number that have been inputted in the product list in the storage device 33 (step S12). After step S12, the controller 30 causes the display device 31 to display a first notification screen 80 shown in Fig. 8, indicating that the product ID and the serial number have been successfully inputted (step S13).

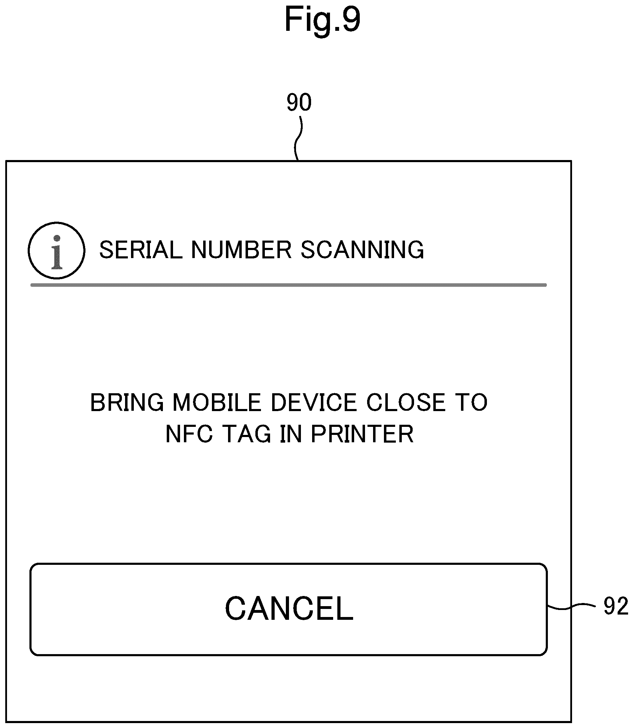

After step S13, the controller 30 repeatedly decides that the mentioned notice has not been confirmed, until an OK key 82 in the first notification screen 80 is touched (NO at step S14). When the user touches the OK key 82 in such a state, the touch panel 32 detects the touch operation performed on the OK key 82, and the controller 30 decides that the notice has been confirmed (YES at step S14). Then the controller 30 causes the display device 31 to display a first instruction screen 90 shown in Fig. 9, for urging the user to bring the terminal device 3 close to the NFC tag 4 (step S15).

After step S15, the controller 30 repeatedly decides that the NFC tag 4 has not been detected (NO at step S16), and that the cancel instruction has not been received (NO at step S17), until the reader-writer 39 detects the NFC tag 4, or until a cancel key 92 in the first instruction screen 90 is touched.

When the user touches the cancel key 92 in such a state, without bringing the terminal device 3 close to the NFC tag 4, and the touch panel 32 detects the touch operation performed on the cancel key 92 (YES at step S17), the controller 30 finishes the license authentication process.

On the other hand, when the user brings the terminal device 3 close to the NFC tag 4, without touching the cancel key 92, and the reader-writer 39 detects the NFC tag 4 (YES at step S16), the controller 30 causes the reader-writer 39 to retrieve the information stored in the NFC tag 4 (step S18).

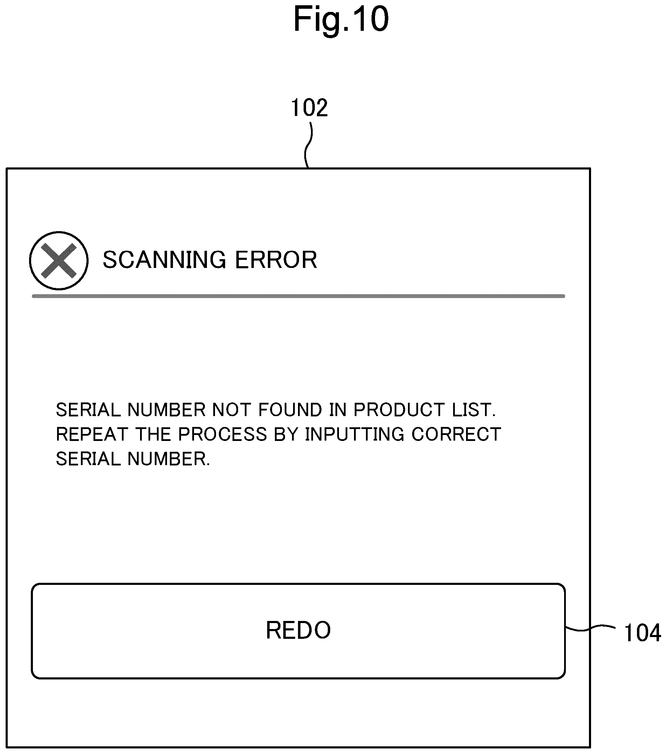

After step S18, the controller 30 decides whether the product list stored in the storage device 33 includes the serial number that accords with the information retrieved (step S19). In the case where the product list does not include the serial number that accords with the information retrieved (NO at step S19), the controller 30 causes the display device 31 to display a first error screen 102 shown in Fig. 10, urging the user to input the serial number again (step S20).

After step S20, the controller 30 repeatedly decides that a redoing instruction has not been received, until a redo key 104 in the first error screen 102 is touched (NO at step S21). When the user touches the redo key 104 in such a state, and the touch panel 32 detects the touch operation performed on the redo key 104, the controller 30 decides that the redoing instruction has been received (YES at step S21), and returns to step S10.

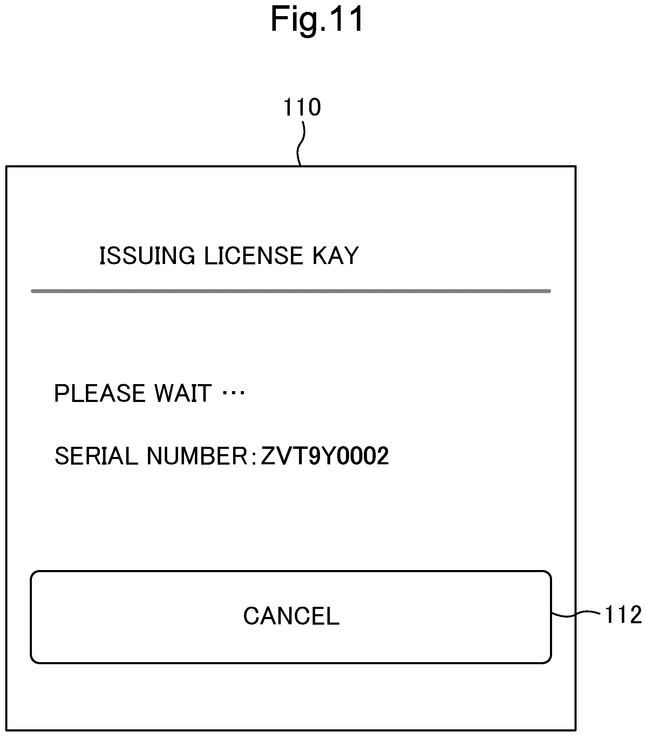

In contrast, when the product list includes the serial number that accords with the information retrieved (YES at step S19), the controller 30 requests the API 5, via the communication device 34, to issue the license key using the data in the product list, namely the combination of the serial number that accords with the information retrieved, and the product ID (step S22). After step S22, the controller 30 causes the display device 31 to display a second notification screen 110 shown in Fig. 11, indicating that the request to issue the license key has been made (step S23).

The server of the API 5 possesses license keys, respectively corresponding to the plurality of serial numbers, with respect to each product ID. When it is possible to issue the license key corresponding to the acquired data, the server issues the license key and transmits the same to the terminal device 3. However, when the license key is unable to be issued, for example because of the license key corresponding to the acquired data being non-existent, the server transmits an error signal to the terminal device 3.

After step S23, the controller 30 repeatedly decides that the license key has not been received (NO at step S24), that the cancel instruction has not been received (NO at step S25), and that no error has occurred (NO at step S26), until the license key is received via the communication device 34, or a cancel key 112 in the second notification screen 110 is touched, or occurrence of an error is detected.

When the user touches the cancel key 112, and the touch panel 32 detects the touch operation performed on the cancel key 112, the controller 30 decides that the cancel instruction has been received (YES at step S25), and finishes the license authentication process.

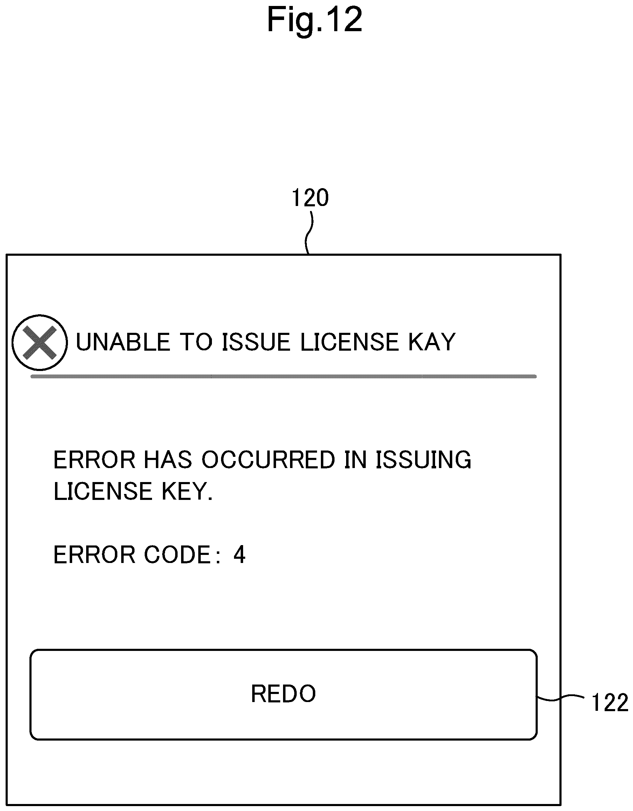

In the case where the error signal is received from the server of the API 5, via the communication device 34, or where a communication failure occurs between the terminal device 3 and the API 5, the controller 30 decides that an error has occurred (YES at step S26), and causes the display device 31 to display a second error screen 120 shown in Fig. 12, indicating that the license key is unable to be issued (step S27).

After step S27, the controller 30 repeatedly decides that the redoing instruction has not been received, until a redo key 122 in the second error screen 120 is touched (NO at step S28). When the user touches the redo key 122 in such a state, and the touch panel 32 detects the touch operation performed on the redo key 122, the controller 30 decides that the redoing instruction has been received (YES at step S28), and returns to step S22.

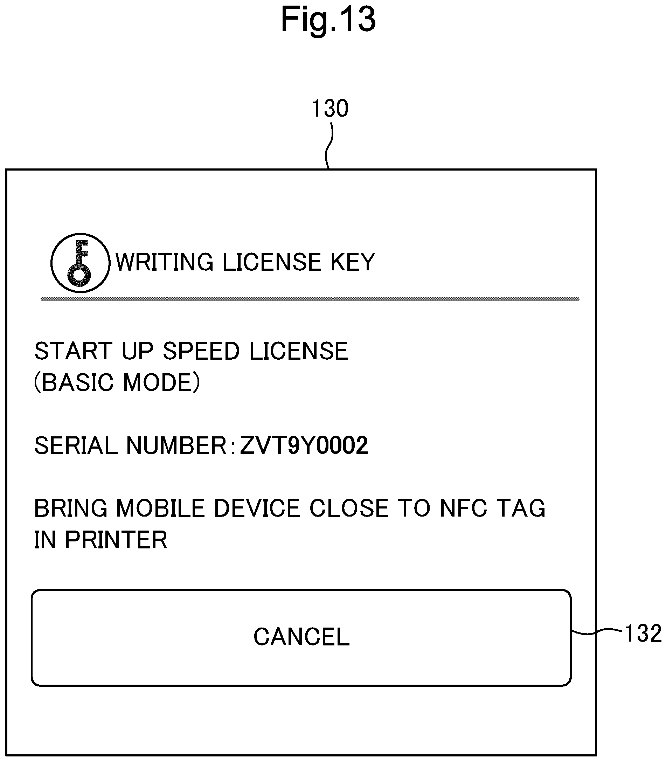

In contrast, upon receipt of the license key from the API 5 via the communication device 34, the controller 30 decides that the license key has been received (YES at step S24), and causes the display device 31 to display a second instruction screen 130 shown in Fig. 13, for urging the user to bring the terminal device 3 close to the NFC tag 4 (step S29).

After step S29, the controller 30 repeatedly decides that the NFC tag 4 has not been detected (NO at step S30), and that the cancel instruction has not been received (NO at step S31), until the reader-writer 39 detects the NFC tag 4, or a cancel key 132 in the second instruction screen 130 is touched.

When the user touches the cancel key 132, and the touch panel 32 detects the touch operation performed on the cancel key 132, the controller 30 decides that the cancel instruction has been received (YES at step S31), and finishes the license authentication process.

On the other hand, when the user brings the terminal device 3 close to the NFC tag 4, without touching the cancel key 132, and the reader-writer 39 detects the NFC tag 4 (YES at step S30), the controller 30 causes the reader-writer 39 to write the license key that has been received, in the NFC tag 4 (step S32).

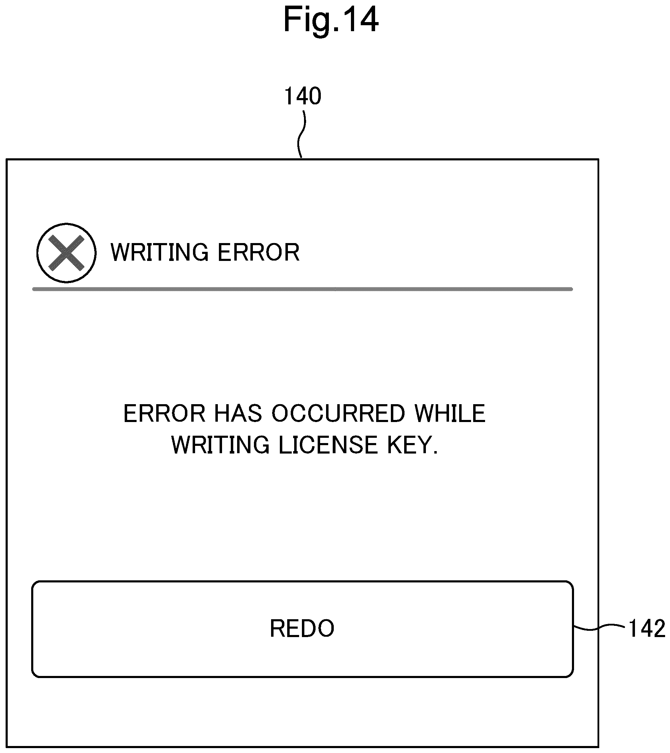

After step S32, the controller 30 decides whether the license key has been successfully written (step S33). For example, when the user accidentally moves the terminal device 3 away from the NFC tag 4 during the writing operation, and therefore the writing operation fails, the controller 30 decides that the writing operation has failed (NO at step S33), and causes the display device 31 to display a third error screen 140 shown in Fig. 14, indicating that the writing of the license key has failed (step S34).

After step S34, the controller 30 repeatedly decides that the redoing instruction has not been received, until a redo key 142 in the third error screen 140 is touched (NO at step S35). When the user touches the redo key 142 in such a state, and the touch panel 32 detects the touch operation performed on the redo key 142, the controller 30 decides that the redoing instruction has been received (YES at step S35), and returns to step S29.

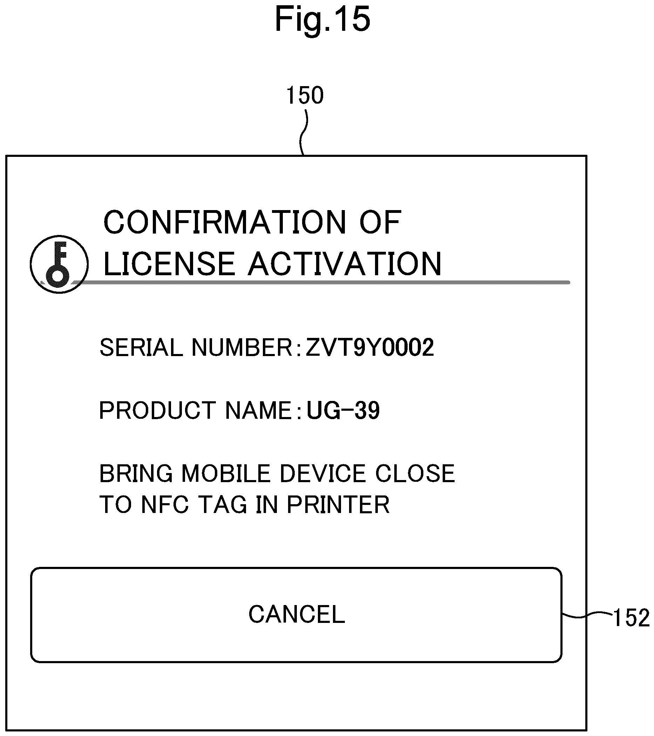

In contrast, when the license key is normally written, the controller 30 decides that the license key has been successfully written (YES at step S33), and causes the display device 31 to display a third instruction screen 150 shown in Fig. 15, for urging the user to bring the terminal device 3 close to the NFC tag 4 (step S36).

After step S36, the controller 30 repeatedly decides that the NFC tag 4 has not been detected (NO at step S37), and that the cancel instruction has not been received (NO at step S38), until the reader-writer 39 detects the NFC tag 4, or a cancel key 152 in the third instruction screen 150 is touched.

When the user touches the cancel key 152 in such a state, without bringing the terminal device 3 close to the NFC tag 4, and the touch panel 32 detects the touch operation performed on the cancel key 152 (YES at step S38), the controller 30 finishes the license authentication process.

On the other hand, when the user brings the terminal device 3 close to the NFC tag 4, without touching the cancel key 152, and the reader-writer 39 detects the NFC tag 4 (YES at step S37), the controller 30 repeatedly decides that the authentication of the product license has not been completed, until the reader-writer 39 reads out completion information, written by the image forming apparatus 2, from the NFC tag 4 (NO at step S39).

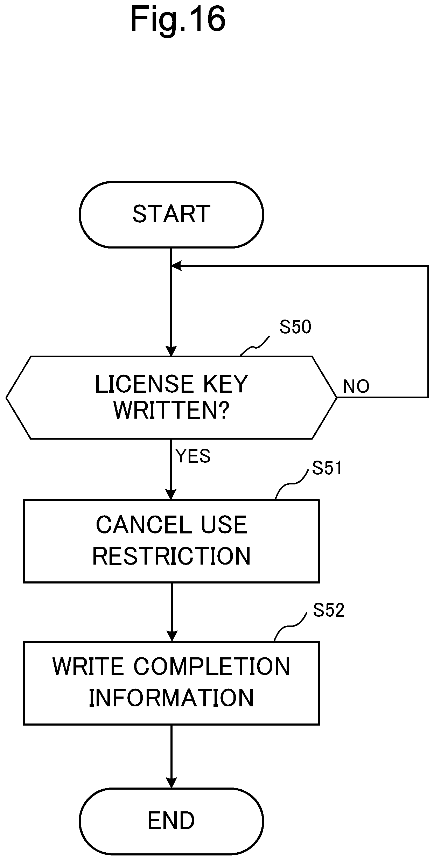

Now, when the user turns on the power to the image forming apparatus 2, in the initial state at the time of delivery from the factory, the controller 10 starts, with the use of the components of the image forming apparatus 2 being restricted, to execute the use-restriction cancelling process specified in Fig. 16, and repeatedly decides that the license key has not been written in the NFC tag 4, until the license key is written therein (NO at step S50).

When the license key is written in the NFC tag 4 as above, by the controller 30 of the terminal device 3, the controller 10 of the image forming apparatus 2 decides that the license key has been written (YES at step S50), and cancels the use restriction on the components of the image forming apparatus 2 (step S51). After step S51, the controller 10 writes completion information, indicating that the authentication of the product license has been completed, in the NFC tag 4 (step S52). After step S52, the controller 10 finishes the use-restriction cancelling process.

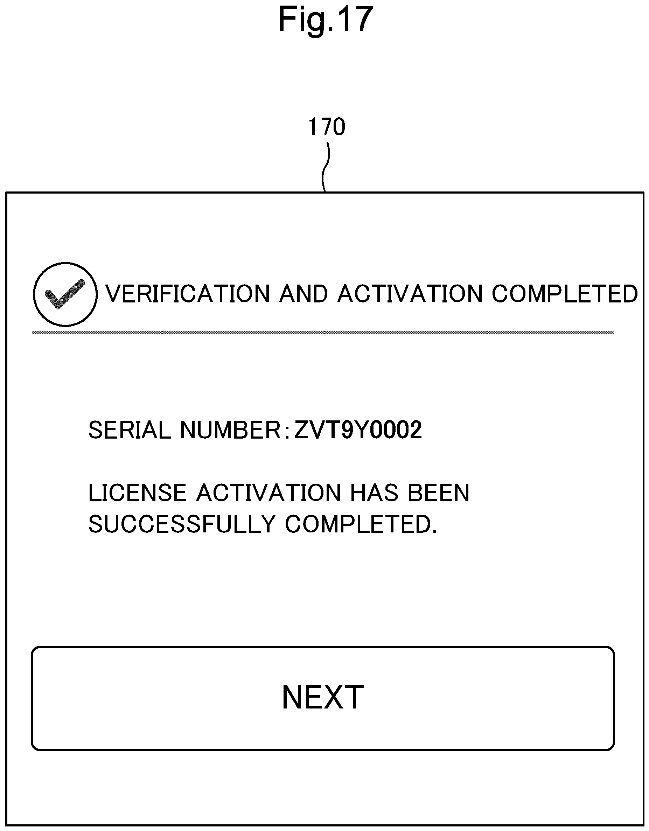

When the reader-writer 39 reads the completion information from the NFC tag 4, the controller 30 of the terminal device 3 decides that the authentication of the product license has been completed (YES at step S39), and causes the display device 31 to display a completion screen 170 shown in Fig. 17, indicating that the authentication of the product license has been completed (step S40). After step S40, the controller 30 finishes the license authentication process.

In general, when the product license is to be authenticated, the user manually inputs the license key, composed of a lengthy and irregular character string. Accordingly, the user is prone to commit an inputting error, which prolongs the time required for the authentication of the product license.

In the case of the first example of the known techniques, the user manually inputs the activation code. The second example of the known techniques is not related to the authentication of the product license. Therefore, these techniques are unable to solve the mentioned drawbacks.

According to the foregoing embodiment, in contrast, the controller 30 of the terminal device 3 retrieves the information from the NFC tag 4 via the reader-writer 39, acquires, when the retrieved information accords with the serial number stored in the storage device 33, the license key corresponding to the according serial number from the API 5 via the communication device 34, and writes the acquired license key in the NFC tag 4, via the reader-writer 39, but keeps from acquiring and writing the license key, when the retrieved information discords with the serial number stored in the storage device 33.

The license key is thus inputted by the terminal device 3 through the NFC technique, and therefore the inputting error can be avoided, unlike the case where the user manually inputs the license key, and the time required for the authentication of the product license can be significantly shortened. In addition, since the license key can be acquired and written, only when the information retrieved from the NFC tag 4 accords with the serial number stored in the storage device 33, the product license can be authenticated with high-level security.

According to the embodiment, further, the controller 10 of the image forming apparatus 2 restricts the image forming device 12 and other components from being used, in the initial state, but cancels such use restriction on the components, once the license key is written in the NFC tag 4. Thus, since the use restriction is immediately cancelled once the license key is written, the authentication of the product license can be quickly completed, which leads to improved user-friendliness of the system.

### First Variation

Although the controller 30 stores at step S32 the product ID and the serial number, inputted through the touch panel 32, in the product list in the storage device 33, the invention is not limited to such embodiment. For example, the controller 10 may verify the product ID and the serial number that have been inputted, using the inputted product ID and the serial number, and the product list in the storage device 33.

In the first variation, to be more specific, the user may touch an import key 54 in the management screen 50 shown in Fig. 5, before authenticating the product license. When the touch panel 32 detects the touch operation performed on the import key 54, the controller 30 acquires, via the communication device 34, the product list including the product IDs of the image forming apparatus 2, and all the serial numbers respectively corresponding to the product IDs, in association with each other, for example from a server device owned by the supplier of the image forming apparatus 2, and stores such product list in the storage device 33.

When the product ID and the serial number are inputted through the touch panel 32, the controller 30 decides, instead of the operation of step S12, whether the product ID and the serial number that accord with the inputted information are included in the product list in the storage device 33.

Upon deciding that the product ID and the serial number that accord with the inputted information are included in the product list, the controller 30 executes the operation of step S13 and the subsequent steps, to retrieve the information from the NFC tag 4. On the other hand, upon deciding that the product ID and the serial number that accord with the inputted information are not included in the product list, the controller 30 does not execute the operation of step S13 and the subsequent steps, and does not retrieve the information from the NFC tag 4.

With the first variation arranged as above, the product ID and the serial number inputted through the touch panel 32 can be verified, before acquiring the information from the NFC tag 4. Therefore, the product license can be authenticated, with still higher security.

### Other Variations

Although the short-range wireless communication is exemplified by the NFC in the foregoing embodiment, the invention is not limited to such embodiment. For example, a communication method that utilizes an ultra-high frequency (UHF) may be adopted.

Although the electronic device is exemplified by the image forming apparatus 2 in the embodiment, the invention is not limited to such embodiment. The type of the electronic device is not specifically limited, provided that the electronic device requires the authentication of the product license, and may be, for example, a PC.

Although the image forming device 12 is configured to form an image on the sheet P according to the foregoing embodiment, the invention is not limited to such embodiment. The image forming device 12 may form an image, for example, on an overhead projector (OHP) sheet.

The invention may be modified in various manners, without limitation to the foregoing embodiment and the variations thereof. For example, although the image forming apparatus 2 according to the invention is exemplified by the color multifunction peripheral in the embodiment, the image forming apparatus 2 may be a different type of apparatus, such as a monochrome multifunction peripheral, a copier, or a facsimile machine.

Further, the configurations and processings described in the foregoing embodiments with reference to Fig. 1 to Fig. 17 are merely exemplary, and in no way intended to limit the invention to those configurations and processings.

## Claims

1. A terminal device (3) comprising:
a storage device (33) containing in advance a serial number unique to an electronic device (2);
a reader-writer (39) that performs short-range wireless communication, with an electronic tag (4) provided in the electronic device (2);
a communication device (34) that communicates with a management device (5) that manages a license key corresponding to the serial number; and
a control device (300) including a processor, and configured to act, when the processor executes a computer program, as a controller (30) that:
retrieves information from the electronic tag (4) via the reader-writer (39):
acquires, when the retrieved information accords with the serial number stored in the storage device (33), the license key corresponding to the according serial number from the management device (5) via the communication device (34);
writes the license key in the electronic tag (4) via the reader-writer (39); and
keeps from acquiring and writing the license key, when the retrieved information discords with the serial number stored in the storage device (33).

2. The terminal device (3) according to claim 1, further comprising an operation device (32) that receives an input of information from a user,
wherein the controller (30) retrieves the information from the electronic tag (4), when the information inputted through the operation device (32) accords with the serial number stored in the storage device (33), but keeps from retrieving the information from the electronic tag (4), when the information inputted through the operation device (32) discords with the serial number stored in the storage device (33).

3. The terminal device (3) according to claim 2,
wherein the controller (30) is configured to:
acquire, through the communication device (34), the product list from a server device that manages the product list including all the serial numbers respectively corresponding to the electronic devices (2), and store the product list in the storage device (33);
retrieve the information from the electronic tag (4), when the information inputted through the operation device (32) accords with the serial number included in the product list; and
keep from retrieving the information from the electronic tag (4), when the information inputted through the operation device (32) discords with the serial number included in the product list.

4. An electronic device (2) comprising:
an electronic tag (4) containing information;
a processing device that executes a predetermined operation; and
a control device (100) including a processor, and configured to act, when the processor executes a computer program, as a controller (10) that:
restricts the processing device from being used, in an initial state; and
cancels the use restriction on the processing device, when a license key is written in the electronic tag (4).

5. The electronic device (2) according to claim 4,
wherein the processing device includes an image forming device (12) that forms an image on a sheet.

6. An authentication system (1) comprising:
an electronic device (2); and
a terminal device (3),
wherein the electronic device (2) includes:
an electronic tag (4) containing information;
a processing device that executes a predetermined operation; and
a first control device (100) including a processor, and configured to act, when the processor executes a computer program, as a first controller (10) that restricts the processing device from being used, in an initial state,
the terminal device (3) includes:
a storage device (33) containing in advance a serial number unique to an electronic device (2);
a reader-writer (39) that performs short-range wireless communication, with the electronic tag (4);
a communication device (34) that communicates with a management device (5) that manages a license key corresponding to the serial number; and
a second control device (300) including a processor, and configured to act, when the processor executes a computer program, as a second controller (30) that:
retrieves information from the electronic tag (4) via the reader-writer (39):
acquires, when the retrieved information accords with the serial number stored in the storage device (33), the license key corresponding to the according serial number from the management device (5) via the communication device (34);
writes the license key in the electronic tag (4) via the reader-writer (39); and
keeps from acquiring and writing the license key, when the retrieved information discords with the serial number stored in the storage device (33), and
the first controller (10) of the electronic device (2) cancels the use restriction on the processing device, when a license key is written in the electronic tag (4).
